Europäisches Patentamt

European Patent Office

Office européen des brevets

(19)

(11) Veröffentlichungsnummer : **0 155 340**
**B1**

(12) **EUROPÄISCHE PATENTSCHRIFT**

(45) Veröffentlichungstag der Patentschrift :
**19.10.88**

(21) Anmeldenummer : **84104682.4**

(22) Anmeldetag : **26.04.84**

(51) Int. Cl.⁴ : **F 23 L 17/00, F 28 C 1/00**

(54) **Verfahren und Anlage zum Abführen der Abgase von fossilen Brennstoffen, vorzugsweise von Rauchgasen mit Hilfe des Abluftstromes einer Kühlanlage, insbesondere nach dem Passieren eines Nassabscheiders mit einem Kühlturm.**

(30) Priorität : **02.03.84 DE 3407705**

(43) Veröffentlichungstag der Anmeldung :
**25.09.85 Patentblatt 85/39**

(45) Bekanntmachung des Hinweises auf die Patenterteilung : **19.10.88 Patentblatt 88/42**

(84) Benannte Vertragsstaaten :
**AT BE CH DE FR GB IT LI LU NL SE**

(56) Entgegenhaltungen :
**DE-A- 1 601 137**
**DE-A- 1 941 193**

(73) Patentinhaber : **HAMON-SOBELCO S.A.**
**50-58, Rue Capouillet**
**B-1060 Bruxelles (BE)**

(72) Erfinder : **Andres, Otfried, Dipl.-Ing.**
**Holbeinstrasse 22**
**D-5628 Heiligenhaus (DE)**
Erfinder : **Leidinger, Bernhard, Dipl.-Ing.**
**Hackland 7**
**D-4300 Essen (DE)**
Erfinder : **Lemmens, Pierre, Dipl.-Ing.**
**rue Pieter 56**
**B-1190 Brüssel (BE)**
Erfinder : **Pflaumbaum, Heinz-Jürgen, Ing.-grad**
**Brunsbergweg 6a**
**D-5810 Witten-Heven (DE)**

(74) Vertreter : **Herrmann-Trentepohl, Werner, Dipl.-Ing. et al**
**Schaeferstrasse 18**
**D-4690 Herne 1 (DE)**

Jouve, 18, rue St-Denis, 75001 Paris, France ·

EP 0 155 340 B1

## Beschreibung

Die Erfindung betrifft ein Verfahren zum Abführen der nach Durchströmen eines Abgaswäschers entschwefelten, abgekühlten Abgase von fossilen Brennstoffen gemäß dem Oberbegriff des Anspruchs 1.

Die Erfindung bezieht sich auf die Abgabe von fossilen Brennstoffen, die in Prozessen entstehen, welche unter hohen Temperaturen ablaufen. Das ist der Fall z. B. bei industriellen Feuerungen vornehmlich in Kraftwerken. Diese Abgase enthalten neben relativ ungefährlichen Verbindungen eine Reihe von Schadstoffen, zu denen außer Schwefeloxyden auch Stickoxyde und Chlorverbindungen gehören. Die Ableitung dieser Gase unterliegt bei Großfeuerungsanlagen strengen Vorschriften. Dazu gehören die Kaminhöhe, die Rauchgastemperatur, die Inhaltsstoffkonzentration und die Imissionsbelastung. Die Erfindung bezieht sich daher insbesondere auf die Ableitung von Rauchgasen aus den Feuerungsanlagen von Kraftwerken, vor allem von Braunkohle- und Steinkohlekraftwerken.

Im allgemeinen ist man bemüht, derartige Rauchgase mit entsprechend hohen Temperaturen über hohe Kamine abzuführen, um eine möglichst weitgehende Verdünnung mit der Atmosphäre zu erreichen. Die öffentlichen Diskussionen der angeblich durch den Schwefelgehalt der Rauchgase in der Atmosphäre verursachten Säurebildung (saurer Regen) hat in zunehmendem Maße zu Auflagen (Großfeuerungsanlagenverordnung, Technische Anleitung Luft) geführt, welche u. a. eine Entschwefelung der Rauchgase vorschreiben. Im allgemeinen sind die dazu bekannt gewordenen Verfahren und Rauchgaswäschen aber mit einer starken Temperaturabsenkung der Rauchgase bis zu ca. 50 °C verbunden. Die die Rauchgaswäsche verlassenden gesättigten Rauchgase enthalten zudem Schwefel in einer Restkonzentration. Deswegen können sie durch Kamine nur nach vorheriger Aufheizung abgeführt werden. Schwierigkeiten bereiten auch die Verfahren, mit denen andere Schadstoffe aus den Rauchgasen entfernt werden können. In dem Bestreben, die mit der Wiederaufheizung verbundenen Kosten zu vermeiden, führt man entschwefelte kalte Rauchgase mit Temperaturen von ca. 50 °C bis 70 °C über Kühltürme ab. Dadurch ist es nämlich möglich, den Auftrieb der durch den Kühlprozeß aufgeheizten Abluft auszunutzen, um die eingeführten abgekühlten Rauchgase mit dem geforderten zusätzlichen Auftrieb zu versehen, wodurch eine Wiederaufheizung über investitionskostenintensive Wärmeaustauscher oder durch Dampfauskopplung mit betriebskostenintensiven Dampfwärmeaustauschern entfallen kann. Zudem erhöht sich bei der Wiederaufheizung die Menge der Rauchgasinhaltsstoffe bezogen auf die gleiche abgegebene Nutzenenergie der Anlage, die in die Atmosphäre abgegeben werden muß, weil regenerative Wärmetauscher über den Schlupf ungereinigte zu den gereinigten

Rauchgasen mischen ; bei einer Dampfauskopplung wird der Anlagenwirkungsgrad kleiner. Bei der überwiegenden Zahl der Fälle handelt es sich um Naßkühltürme, vorzugsweise solche mit Naturzug. Im allgemeinen arbeiten solche Kühltürme nach dem sogenannten Gegenstromprinzip oder führen die Kühlluft durch das von den Einbauten abregnende Wasser im Querstrom. Oberhalb der Einbauten passiert die Abluft den Schlot des Kühlturmes. Dieser wird von der meist parabolisch gekrümmten Kühlturmschale gebildet. An der Krone solcher Kühltürme tritt die Abluft aus. Aufgrund des Wärme- und Stoffaustausches bilden sich Schwaden (gesättigte Kühlluft), die aufgrund des Phasenwechsels des Wassers latente Wärme gespeichert haben. Die große Wärmespeicherfähigkeit im Schwaden ist der Grund, warum die den thermischen Auftrieb erzeugende — durch die Temperaturdifferenz des Schwadens zur Umgebung und den Phasenwechsel des Wassers induzierte — Dichtedifferenz so lange erhalten bleibt und dafür sorgt, daß der Kühlturmschwaden größere Aufstiegshöhen als übliche Rauchgasfahnen aus Kaminen erreicht. Während nämlich die anfängliche Strömungsenergie (Impuls) schon nach einer sehr kurzen Distanz durch turbulente Reibungsvorgänge verbraucht ist, sorgen die thermischen Auftriebskräfte kontinuierlich für eine der Gravitationskraft entgegengesetzte Beschleunigung.

Die Erfindung bezieht sich insbesondere auf derartige Kühlanlagen. Es ist bereits ein Verfahren zum Abführen der Abgase von fossilen Brennstoffen, vorzugsweise Rauchgasen, mit Hilfe des Abluftstromes einer Kühlanlage mit einem Kühlturm aus der DE-C-24 53 488 bekannt. Im Gegensatz zu einem anderweitig bekannten Verfahren, bei dem man die Technik der Abluft eines Kühlturmes zur Auftriebsverbesserung eingeleiteter Abgase eines Kernkraftwerkes ausnutzt und auch im Gegensatz zu einem anderen der bekannten Verfahren, mit dem man den Kühlluftdurchsatz eines Naturkühlturmes durch eingeleitete heiße Turbinenabgase vergrößert, werden bei dem von der Erfindung als bekannt vorausgesetzten Verfahren die naß gereinigten Gase einer Rauchgasentschwefelungsanlage nicht wie auch bekannt in einem Strom zusammengefaßt in den Kühlturm abgegeben, sondern verlassen die Abgaszuleitung im Kühlturm durch eine Mehrzahl von über den Querschnitt der Kühlturmschale oberhalb des Tropfenfangs verteilt angeordnete, mit Leitlechen bestückte Ausmündungen, mit denen eine vom praktischen Standpunkt homogene Verteilung der Abgase im Schwaden bzw. Abluft des Kühlturmes angestrebt wird.

Die bei dem vorbekannten Verfahren auftretende homogene Durchmischung der Inhaltsstoffe von den naß gereinigten Rauchgasen (insbesondere sind dies die Restkonzentrationen von Schwefelverbindungen) mit dem Schwaden überall innerhalb des Schwadens zur Bildung von (schwefeliger oder auch Schwefel) Säure führt. Diese Säurebildung ist nicht etwa eine homogene Reaktion, sondern findet auf den durch mitgeführte Keime ausgelösten Sekundärkondensationen und auf den Oberflächen der Sprühtropfen statt. Eine solche chemische Umwandlung ist nur innerhalb einer sehr kleinen Grenzkonzentration noch von dem Konzentrationsgefälle abhängig, die jedoch trotz Rauchgasreinigung und homogener Vermischung der naß gereinigten Abgase mit der Abluft des Kühlturms in der Regel überschritten wird. Oberhalb dieser Grenzkonzentration ist die chemische Umwandlung unabhängig von der Menge der für die Reaktion verfügbaren Schadstoffe. Deshalb findet bei dem vorbekannten Verfahren im gesamten Schwadenbereich eine maximale Umsetzung satt, die über Sprühverluste und Sekundärkondensationen im Nahbereich des Kühlturms ausfällt und für die beschriebenen Schäden verantwortlich ist.

Die Erfindung geht aus von einem Verfahren zum Abführen von Rauchgasen mit Hilfe des Abluftstromes einer Kühlanlage mit einem Kühlturm, wie es aus der DE-A-1 601 137 hervorgeht. Dabei ist ein Schornstein vorzugsweise mittig innerhalb des Kühlturms angeordnet. In einem ersten Ausführungsbeispiel ragt der Schornstein dabei hoch aus dem Kühlturm heraus. Eine Vermischung der Abgase mit dem aus dem Kühlturm herautretenden Schwaden findet dabei nicht statt. Zum Abführen der Abgase aus einem derartig hohen Schornstein ist eine erneute Aufheizung der vorher gereinigten und abgekühlten Abgase notwendig, was sehr kostenintensiv ist.

Ein zweites Ausführungsbeispiel der vorbekannten Baueinheit sieht vor, daß der Schornstein als vorzugsweise 10 bis 15 m hoher Stummel ausgebildet und mittig in dem Kühlturm angeordnet ist und daß der Stummel oberhalb des Bodens bzw. der Kühlereinbauten endet. D. h., daß die Rauchgase lediglich ins Innere des Kühlturms eingeleitet werden, wobei die Temperatur der Rauchgase im Bereich zwischen 140 und 200 Grad Celsius liegt. Es findet im unteren Bereich des Kühlturmes eine Vermischung der Rauchgase mit dem Abluftstrom statt, so daß am Ausgang des Kühlturms sich der übliche Schwaden bildet und die Emissionsbelastung im Nahbereich des Kühlturms bzw. des Kraftwerks erheblich ist. Außerdem besteht die Gefahr, daß durch die Vermischung von Abgas und Abluft bereits im Kühlturminneren aggressive Stoffe entstehen, die die Kühlturmeinbauten schädigen bzw. zerstören können. Im übrigen ist das Einleiten der Rauchgase in den unteren Bereich des Kühlturms seit langem bekannt, so aus der GB-A-525 702, der FR-A-10 54 296 und der DE-C-347 141.

Der Erfindung liegt die Aufgabe zugrunde, einerseits die mit dem bekannten Verfahren erreichte Energieeinsparung durch den Fortfall der Wideraufheizung der Rauchgase nach ihrer Abkühlung beizubehalten, andererseits aber das Verfahren so zu führen, daß die Imissionsbelastung im Nahbereich des Kühlturmes bzw. des Kraftwerkes verringert wird.

Diese Aufgabe löst die Erfindung mit den kennzeichnenden Merkmalen des Anspruches 1. Zweckmäßige Ausführungsformen der Erfindung sind Gegenstand ihrer Unteransprüche.

Die Erfindung hat den Vorteil, daß alle Beeinträchtigungen durch Säurebildung im Kühlturm entfallen und dementsprechend insbesondere die Kühlturmeinbauten geschützt werden. Außerhalb des Kühlturmes verhalten sich die Kühlturmschwaden trotz der gemeinsam mit ihnen emittierten Rauchgase weitgehend so wie die Kühlturmschwaden von Anlagen, bei denen die Rauchgase über Kamine abgeleitet werden, die in der Regel ebenfalls mit den Kühlturmschwaden in Kontakt geraten. Allerdings ergibt sich bei dem erfindungsgemäßen Verfahren demgegenüber die Einsparung an Energie durch die notwendige Wiederaufheizung der abgekühlten Abgase. Wegen der bei 100 °C bis 150 °C liegenden Abgastemperáturen für die Kaminabführung ist diese Einsparung sehr erheblich.

Bei dem erfindungsgemäßen Verfahren findet infolge der thermischen Turbulenzen oberhalb der Kühlturmzone eine Vermischung der Abgase mit dem Schwaden statt, die dazu führt, daß bei dem erfindungsgemäßen Verfaren in einem Abstand von etwa fünf Kühldurchmessern, das sind bei üblichen Kraftwerken z. B. 500 m Abstand, eine homogene Verteilung der Rauchgase mit den Kühlturmschwaden stattfindet.

Üblicherweise werden die Sprühtropfen und Sekundärkondensationen bis zu 1,5 km weit getragen. Innerhalb eines Kreises mit einem diesen Abständen entsprechenden Radius um den Kühlturm wird demnach durch das erfindungsgemäße Verfahren das Imissionsverhalten verbessert.

Von besonderer Bedeutung ist das erfindungsgemäße Verfahren für solche Kraftwerde, welche ihre Rauchgase nicht nur entschwefeln, sondern auch andere Schadstoffe, darunter vor allem die Stickoxyde entfernen, bevor die Abgase emittiert werden.

Durch die Reduzierung der salpetersäurebildenden NO bzw. $NO_2$-Moleküle werden weniger OH-Radikale als zuvor gebunden und stehen für die Bildung von Schwefelsäure oder schwefliger Säure vermehrt zur Verfügung. Gerade für diesen Anwendungsfall ist es wichtig, die Stoffströme durch das erfindungsgemäße Verfahren zu trennen.

Mit den Merkmalen des Anspruches 2 wird erreicht, daß die Vermischung der Abgase mit den Kühlturmschwaden verzögert und sich dadurch im Ergebnis der Kreis vergrößern läßt, in dem das Emissionsverhalten um den Kühlturm verbessert wird. Der für diese Ausführungsform des Verfahrens erforderliche bauliche Aufwand ist relativ gering.

Mit dem Merkmal des Anspruches 2 läßt sich eine weitere Eigenschaft des erfindungsgemäßen Verfahrens vorteilhaft nutzen.

Während man bei dem bekannten Verfahren bei Ausfall der Rauchgasreinigung in der Regel gezwungen ist, das im By-pass zu den Naßwäschern geführte Abgas über einen Notkamin abzuführen, ermöglicht die Erfindung die Weiterbenutzung der Zuleitung zum Kühlturm, weil das heiße und mit allen Schadstoffen beladene Abgas der Anlage den Kühlturm nicht beeinträchtigen kann.

Ähnliches gilt auch für das An- und Abfahren der Anlage und auch für alle anderen Betriebszustände, bei denen der Kühlturm unter Teillast gefahren wird (z. B. Wärmeauskopplung — Heizkraftwerksbetrieb). Bei verminderter oder fehlender Schwadenbildung im Kühlturm ermöglicht die Erfindung ebenfalls eine Weiterbenutzung der Anlage ohne Notkamine oder sonstige Hilfseinrichtungen, da im Gegensatz zu dem bekannten Verfahren mit homogener Vermischung eine definierte Rauchgasführung bis zur Kühlturmkrone existiert und die Rauchgase hier mit hohen Geschwindigkeiten emittiert werden können.

Wenn man die Abgase aus der Zuleitung konzentrisch in den Abluftstrom einführt, ergibt sich eine Verminderung der Menge des Schwadens, der mit dem Abgasstrom in Berührung kommt. Das führt dazu, daß im Kern des Abluftstromes keine Sekundärkondensationen· stattfinden und die Schadstoffimmission auf den Mantel des Abgasstromes in den niedrigen Luftschichten beschränkt bleibt. Da der Abgasstrom erst im Bereich der Kühlturmkrone, d. h. unterhalb oder kurz oberhalb des oberen Kühlturmendes eingeführt wird, ergibt sich der für die Beschleunigung der Rauchgase in höhere Luftschichten erforderliche Energieaustausch. Da der Abluftstrom in dem Schlot, d. h. unterhalb der Binmündung der Rauchgase in den Abluftstrom bzw. den Schwaden getrennt von dem Abgasstrom gehalten wird, bildet sich innerhalb der Kühlturmschale die übliche Strömung aus, welche frei von den bei dem bekannten Verfahren durch die Einführung des Abgasstromes in den Kühlturm erzeugten Wirbeln ist. Dadurch stellt sich die angestrebte bessere Zugwirkung des Kühlturms auf natürliche Weise ein.

Die Einzelheiten, weiteren Merkmale und andere Vorteile der Erfindung ergeben sich aus der nachfolgenden Beschreibung des Erfindungsgegenstandes anhand der Figuren in der Zeichnung ; es zeigen

Fig. 1 schematisch und unter Fortlassung aller für das Verständnis der Erfindung nicht erforderlicher Einzelheiten einen Naturzugkühlturm im Längsschnitt und die damit verbundenen Teile der erfindungsgemäßen Anlage,

Fig. 2 eine Draufsicht auf den Gegenstand der Fig. 1 und

Fig. 3 eine Einzelheit, die mit III in Fig. 1 gekennzeichnet ist.

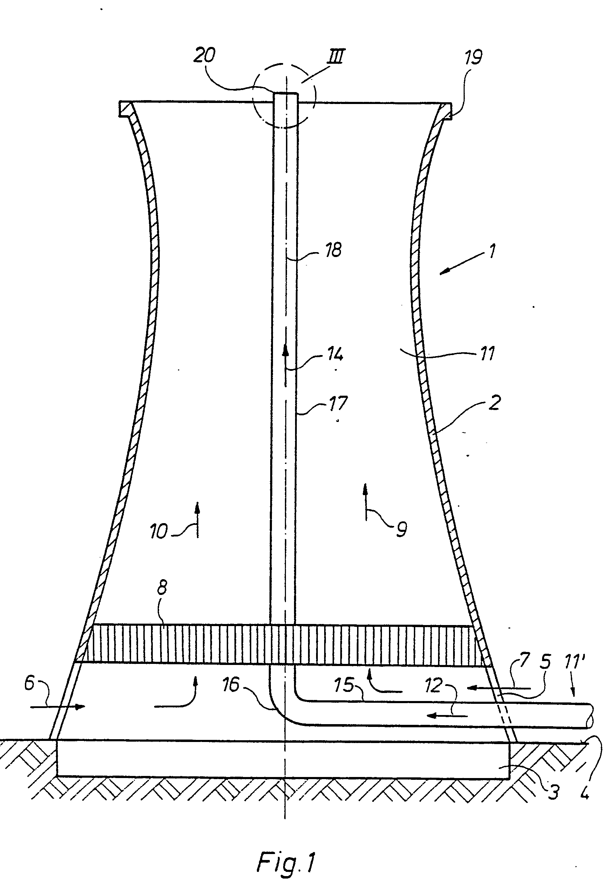

Der in Fig. 1 dargestellte Kühlturm 1 hat eine parabolische Kühlturmschale 2 aus Beton. Er steht über einer allgemein mit 3 bezeichneten und in den Boden 4 eingelassenen Wassertasse auf Stützen oder Streben 5, durch deren Zwischenräume atmosphärische Luft in Richtung der Pfeile 6, 7 in den Kühltum einströmen kann. Im Gegenstrom zu der Luft wird Kühlwasser über Einbauten 8 abgeregnet. Oberhalb der Einbauten strömt die Abluft in Richtung der Pfeile 9, 10 durch den Schlot 11 des Kühlturms 1 mit erheblichem Auftrieb wegen der Aufheizung durch das zu kühlende Wasser ab. Hierbei tritt bereits eine Schwadenbildung ein.

Eine Rohrleitung 11' dient als Zuleitung für Abgase einer Feuerung und kann sowohl mit den Abgasen eines Naßabscheiders beaufschlagt werden, der zur Entschwefelung der Rauchgase dient, läßt sich aber auch über einen By-pass am Naßabscheider mit ungereinigten Abgasen beaufschlagen. Die Abgase strömen in Richtung der Pfeile 12, 14 zunächst durch einen waagerechten, unterhalb der Einbauten 8 im Kühlturm radial eingeführten Zweig 15 der Zuleitung und von dort über einen Krümmer 16 in einen senkrechten Rohrleitungsstrang 17, der in der Rotationsachse 18 des Kühlturmparaboloides verlegt ist.

Die Kühlturmschale 2 hat eine Krone 19, die bei dem dargestellten Ausführungsbeispiel ringartig verstärkt ist. Die Mündung 20 der Zuleitung 11', d. h. des senkrechten Rohrstranges 17 liegt etwas oberhalb der Krone 19.

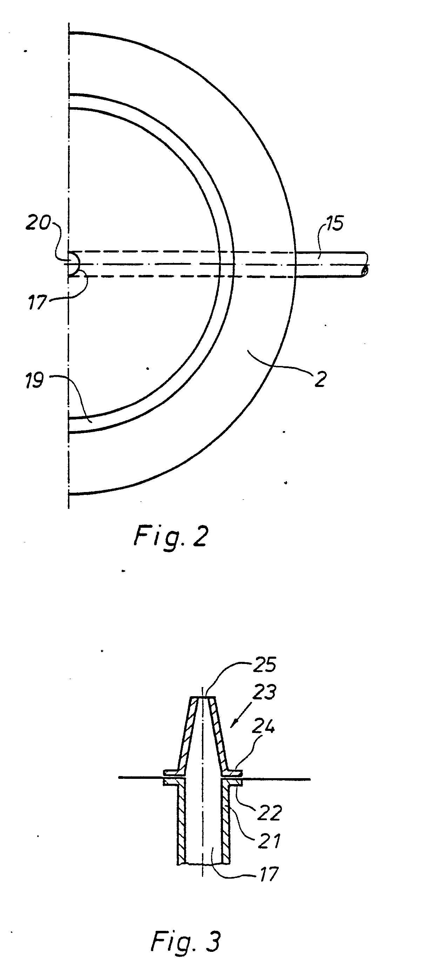

Wie die Darstellung der Fig. 2 erkennen läßt, liegt die Mündung 20 des Rohrstranges 17 konzentrisch zu der Krone 19.

Gemäß der Darstellung der Fig. 3 ist an den oberen Rohrschu8 21 des Rohrstranges 17, d. h. an dessen Ringflansch 22 eine Düse 23 mit einem Ringflansch 24 befestigt. Mit der Düse 23 wird der Abgasstrom vor der Mündung 25 beschleunigt, so daß er mit erhöhter Geschwindigkeit austritt.

Im Betrieb wird der Abluftstrom in dem Schlot 11 wie auch in allen anderen Abschnitten der Kühlturmschale 2 und ihrer Aufständerung 5 mit der Zuleitung 15 bis 17 getrennt von dem Abluftstrom 9, 10 gehalten. Andererseits ist der in seiner Zuleitung 11' zusammengefaßte Abgasstrom nach außen abgeschlossen, bis er die Mündung 20 bzw. 25 erreicht. An der Mündung wird er freigegeben und in einem konzentrischen Gleichstrom mit der über dem Schlot aufsteigenden Abluft des Kühlturms und den mitgeführten Schwaden abgeführt.

Benutzt man die Düse nach Fig.3, so wird der Abgasstrom auf ein Mehrfaches der Austrittsgeschwindigkeit des Abluftstromes beschleunigt, bevor er freigegeben wird.

Die konzentrische Führung des Abgasstromes mit dem Rohrstrang 17 im Schlot 11 des Kühlturmes 1, die in Fig. 1 wiedergegeben ist, ermöglicht eine günstige unterbringung der Zuleitung 11', nämlich innerhalb der Kühlturmschale 2 und eine geradlinige Rohrführung bis zur Mündung 20 bzw. 25.

Im Betrieb des Kraftwerkes nimmt die Zuleitung 11' Abgase aus der Naßreinigung auf, die an der Mündung mit dem aufsteigenden Abluftstrom beschleunigt werden. Beim Anfahren der Anlage kann ungereinigtes Abgas durch die Zuleitung 11' über die Mündung abgeführt werden.

**Patentansprüche**

1. Verfahren zum Abführen der nach Durchströmen eines Abgaswäschers entschwefelten, abgekühlten Abgase von fossilen Brennstoffen, vorzugsweise Rauchgase, mit Hilfe des Abluftstromes (9, 10) einer Kühlanlage mit einem Kühlturm (1), wobei die Abgase (14) in die durch thermischen Auftrieb, gegebenenfalls mit Unterstützung durch Ventilatoren abströmende Abluft (9, 10) abgegeben und dadurch über der Krone (19) eines Schlotes (2) mit vergrößertem Auftrieb in die Atmosphäre freigegeben werden, wobei der Abgasstrom (14) von dem Abluftstrom (9, 10) getrennt über eine Zuleitung (11') in einen konzentrisch im Abluftstrom (9, 10) angeordneten Rohrleitungsstrang (17) geleitet wird, der den Abgasstrom (14) aus seiner Mündung (20, 25) freigibt, dadurch gekennzeichnet, daß der Abgasstrom (14) etwa in der Höhe der Kühlturmkrone (19) in den dort ausmündenden Abluftstrom (9, 10) freigegeben wird, und daß die Abgase (14) in den Strom der über den Schlot (2) aufsteigenden Abluft abgeführt werden.

2. Verfahren nach Anspruch 1, dadurch gekennzeichnet, daß der Abgasstrom mit seinem Austritt aus der Zuleitung (17) auf ein Mehrfaches der Austrittsgeschwindigkeit des Abluftstromes beschleunigt und an der Mündung (22) der Zuleitung (11', 17), freigegeben wird.

3. Verfahren nach einem der Ansprüche 1 oder 2, dadurch gekennzeichnet, daß der in einem Bypass um einen Naßwäscher geführte Abgasstrom beim Anfahren über die Zuleitung (11') und die Mündung (20, 25) in die Atmosphäre abgeführt wird.

4. Vorrichtung zur Durchführung des Verfahrens nach einem der Ansprüche 1 bis 3, bestehend aus einem Kühlturm (1) und einem konzentrisch darin angeordneten Rohrleitungsstrang (17), dem über eine oder mehrere Rohrleitungen (11', 15, 16) Abgase (14) zugeführt werden, dadurch gekennzeichnet, daß die Mündung (20, 25) des Rohrstranges (17) in Höhe der Kühlturmkrone (19) angeordnet ist.

5. Vorrichtung nach Anspruch 4, dadurch gekennzeichnet, daß die Mündung (25) die eines Düsenmundstückes (23) ist, welches das abgasseitige Ende der Zuleitung (11', 17) bildet.

### Claims

1. A method for evacuating cooled exhaust gases, desulphurated having passed through an exhaust gas scourer, from fossil fuels, preferably flue gases, using the exhaust air flow (9, 10) from a cooling plant having a cooling tower (1), in which the exhaust gases (14) are released into the escaping exhaust air (9, 10) by means of thermal lift, if necessary with the assistance of fans, and are thereby released into the atmosphere with increased lift by way of the crown (19) of a chimney (2), wherein the exhaust gas flow (14) separated from the exhaust air flow (9, 10) is fed by means of a pipe (11') into a conduit (17) arranged concentrically in the exhaust air flow (9, 10) which discharges the exhaust gas flow (14) at its outlet (20, 25), characterised in that the exhaust gas flow (14) is released into the escaping exhaust air in the top of the crown of the cooling tower (19) and that the exhaust gases (14) are evacuated in the flow of exhaust air rising above the chimney (2).

2. A method according to claim 1, characterised in that the exhaust gas flow is accelerated to a multiple of the exit speed of the exhaust air flow on leaving the pipe (17) and is released at the outlet (22) of the pipe (11', 17).

3. A method according to claim 1 or 2, characterised in that the exhaust gas flow conducted in a by-pass around a wet scrubber is evacuated into the atmosphere on travelling through the pipe (11') and the outlet (20, 25).

4. Apparatus for carrying out the method according to any one of claims 1 to 3, consisting of a cooling tower (1) and a conduit (17) arranged concentrically therein to which exhaust gases (14) are conducted by means of one or more pipes (11', 15, 16), characterised in that the outlet (20, 25) of the conduit (17) is arranged in the top of the crown of the cooling tower (19).

5. Apparatus according to claim 4, characterised in that the outlet (25) is the outlet of a nozzle end piece (23) which forms the exhaust gas side end of the pipe (11', 17).

### Revendications

1. Procédé pour évacuer des gaz résiduels provenant de combustibles fossiles, tels que des gaz de combustion de préférence, après passage de ces gaz dans un épurateur de désulfuration et après refroidissement, en utilisant le courant d'air (9, 10) qui s'échappe d'une tour de refroidissement (1), ce procédé consistant à décharger le courant des gaz résiduels (14) dans le courant d'air (9, 10) qui monte dans la tour pour s'en échapper, sous l'effet d'un tirage thermique éventuellement augmenté par des ventilateurs, pour permettre aux gaz résiduels de se diffuser ainsi librement dans l'atmosphère au-dessus du couronnement (19) de l'enveloppe (2) de la tour, avec une vitesse ascensionnelle accrue ; l'arrivée du courant des gaz résiduels (14) étant assurée, séparément du courant d'air (9, 10) qui monte dans la tour, par une canalisation d'évacuation (11'), dont une partie (17), coaxiale au courant d'air (9, 10), aboutit à un orifice de sortie (20, 25) par où le courant des gaz résiduels (14) peut s'échapper librement ; procédé caractérisé en ce qu'on libère le courant des gaz résiduels (14) sensiblement à la hauteur du couronnement (19) de la tour de refroidissement, en le déchargeant en cet endroit dans le courant d'air (9, 10) qui s'échappe hors de la tour, et en ce qu'on évacue les gaz résiduels (14) dans le courant d'air ascendant qui s'échappe hors de l'enveloppe (2) de la tour de refroidissement.

2. Procédé selon la revendication 1, caractérisé en ce qu'on accélère le courant des gaz résiduels à l'endroit où il sort de la canalisation d'évacuation (17), pour porter sa vitesse à une valeur qui est un multiple de la vitesse de sortie du courant d'air qui s'échappe hors de la tour de refroidissement, et en ce qu'on libère le courant des gaz résiduels en l'éjectant à l'extérieur à l'endroit de l'orifice de sortie (22) de la canalisation d'évacuation (11',17).

3. Procédé selon l'une des revendications 1 ou 2, caractérisé en ce qu'on fait passer le courant des gaz résiduels dans une dérivation qui contourne un épurateur fonctionnant par voie humide, pour aboutir à la canalisation d'évacuation (11'), afin d'éjecter le courant des gaz résiduels dans l'atmosphère par l'orifice de sortie (20, 25) de la canalisation d'évacuation.

4. Dispositif pour la mise en œuvre du procédé selon l'une des revendications 1 à 3, comportant une tour de refroidissement (1) et au moins une canalisation d'évacuation (11', 15, 16) servant à amener des gaz résiduels (14) et aboutissant à un tronçon de canalisation (17) concentrique à la tour de refroidissement (1) ; dispositif caractérisé en ce que l'orifice de sortie (20, 25) du tronçon de canalisation (17) est situé à la hauteur du couronnement (19) de la tour de refroidissement.

5. Dispositif selon la revendication 4, caractérisé en ce que l'orifice de sortie (25) est situé à l'extrémité d'un ajutage (23) qui constitue la partie terminale de la canalisation d'évacuation (11', 17) des gaz résiduels.

Fig.1

Fig. 2

Fig. 3